## Europäisches Patentamt
## European Patent Office
## Office européen des brevets

(11) Veröffentlichungsnummer: **0 330 941 B1**

(12) # EUROPÄISCHE PATENTSCHRIFT

(45) Veröffentlichungstag der Patentschrift: **10.11.93**

(51) Int. Cl.5: **C05F 11/00**

(21) Anmeldenummer: **89102840.9**

(22) Anmeldetag: **18.02.89**

(54) **Organisch-mineralischer Dünger.**

(30) Priorität: **23.02.88 DE 3805536**

(43) Veröffentlichungstag der Anmeldung:
**06.09.89 Patentblatt 89/36**

(45) Bekanntmachung des Hinweises auf die
Patenterteilung:
**10.11.93 Patentblatt 93/45**

(84) Benannte Vertragsstaaten:
**AT CH DE FR IT LI**

(56) Entgegenhaltungen:
**DE-A- 2 739 618**
**DE-C- 127 339**
**US-A- 3 101 266**

**CHEMICAL ABSTRACTS, Band 101, 5. November 1984, Seite 599, Nr. 169902k, Columbus, Ohio, US; D. LAIRON et al.: "Effect of organic and mineral nitrogen fertilization on yield and nutritive value of butterhead lettuce", & OUAL. PLANT. - PLANT FOODS HUM. NUTR. 1984, 34(2), 97-108**

(73) Patentinhaber: **Lenz, Patrick**
**Josef von Lauffstrasse 52**
**D-56812 Cochem(DE)**

(72) Erfinder: **Lenz, Rolf**
**Endertstrasse 7-9**
**D-5590 Cochem(DE)**

(74) Vertreter: **Hentschel, Peter, Dipl.-Ing.**
**Patentanwalt**
**Hohenzollernstrasse 1**
**D-56068 Koblenz (DE)**

**Beschreibung**

Die Erfindung betrifft einen organisch-mineralischen Dünger, insbesondere zur Verwendung in hochgelegenen, alpinen Böden.

Ein organischer Dünger ist bereits bekannt. So ist in einem Prospekt der Firma Rizinusschrotvertrieb Erwin Lenz, 5590 Cochem/Mosel, Postfach 1340, ein organischer Dünger beschrieben, der je nach Verwendungszweck im wesentlichen an Nährstoffgehalten 75 bis 80 Gew.-% organische Substanz, bis zu 6 Gew.-% Gesamt-Stickstoff (N), 2,5 Gew.-% Gesamt-Phosphat ($P_2O_5$), 1,5 Gew.-% Gesamt-Kaliumoxid ($K_2O$) und biologisch wertvolle Spurenelemente enthält. Wenn dieser Dünger oder eine ähnliche Zusammensetzung davon einem verarmten Boden zugeführt wird, erhält dieser wieder eine ausreichende Humuszufuhr, die sonst nur noch in seltenen Fällen möglich ist. Da in diesem Dünger die Nährstoffe harmonisch aufgebaut sind, tritt in der Pflanze weder eine Über-sättigung noch ein Nährstoffmangel auf. Durch den hohen Gehalt an organischer Substanz werden die Bodenstruktur wesentlich verbessert und die Bodenbakterien belebt, so daß sich eine merkliche Steigerung der Bodenfruchtbarkeit mit diesem organischen Dünger ergibt. Der organische Dünger hat sich insbesondere im Wein-, Obst-, Garten- und Landschaftsbau schon bestens bewährt.

In hochgelegenen, alpinen Böden, die besonders stark von Erosion und physikalischer Verwitterung infolge extremer Temperaturunterschiede betroffen oder deren Vegetation durch Skifahren zerstört worden sind, konnte dieser Dünger jedoch noch nicht den erwünschten Erfolg, nämlich die Grasnarbenbildung und Durchwurzelung in diesen Böden zu fördern, erbringen.

Da ferner der Dünger in loser Form angeboten wird und dementsprechend einen hohen Feinstaubanteil aufweist, ist sein dosiertes Einbringen in den Boden ziemlich aufwendig oder bei starken Winden kaum möglich. Der Dünger wurde daher mit Rohleinöl besprüht, um den Feinstaub zu binden und um so eine gezieltere Düngung zu ermöglichen, was natürlich den Dünger ziemlich verteuerte.

Außerdem ist in der DE-A-2 739 618 ein aus Kaffee- und/oder Erdnußhäutchen bestehendes organisches Düngemittel beschrieben, dem u.a. die wesentlichen Pflanzen-Nährstoffe Stickstoff, Phosphor, Kalium und Magnesium in unterschiedlichen Prozentanteilen, je nach Nährstoffgehalt des Bodens und dem Nähranspruch der Pflanzen, zugesetzt werden können. Sie können aber auch ohne Mineral-Düngemittel verwendet werden. Organische Düngemittel dieser Art, die Mineraldünger enthalten, haben N-P-K in den üblichen Verhältnissen, z.B. 2 bis 15 Gew.-%, vorzugsweise 4 bis 8 Gew.-%, Stickstoff, 10 bis 20 Gew.-%, vorzugsweise 14 bis 15 Gew. -%, Phosphor, und 10 bis 20 Gew.-%, vorzugsweise 10 bis 12 Gew.-%, Kalium. Sie können in Granulat- oder in Pelletform zum Einsatz kommen, wobei die Pellets mit einer Länge von 1 bis 50 mm und einem Querschnitt von 1 bis 10 mm, vorzugsweise von 2 bis 8 mm, verwendet werden.

Wenn diese organischen Düngemittel mit speziellen Düngern und Spurenelementen angereichert werden, können sie auch zur Außendüngung von Baumschulen oder zur Innendüngung in Gewächshäusern verwendet werden.

Diese Düngemittel, die die Kaffee- und/oder Erdnußhäutchen zusammen mit Harnstoff oder anderen organischen Stickstoffverbindungen enthalten, zeigen zwar eine gewisse Langzeitwirkung, doch erfordert der mit ihnen gedüngte Boden in der Regel eine Nachdüngung, die bekanntlich einen hohen Arbeitsaufwand erfordert und daher zur Verbesserung bzw. Erneuerung alpiner Böden kaum in Frage kommt. Auch ist die Granulat- bzw. Pelletformherstellung dieses organischen Düngemittels technisch besonders arbeitsaufwendig.

In der US-A-3 191 266 ist ein Verfahren zur Entallergenisierung und Entgiftung einer Masse aus Rizinussamen sowie zur Herstellung von Dünger aus dieser Masse beschrieben, die unter Zusatz von Wasser und Kalziumhydroxid zu einer Mischung bei einem pH-Wert im Bereich von etwa 9,5 bis etwa 12,5 kombiniert wird. Die so erhaltene, alkalisch reagierende Mischung wird anschließend von etwa 1000 bis 120°C bei etwa 8 bis 60 Minuten erhitzt, um das Rizinussamen-Allergen zu inaktivieren und die giftigen Komponenten in der Rizinussamen-Masse zu zerstören.

Durch Zusatz von Ortho-Phosphorsäure ergibt sich hierbei ein unschädlicher Dünger aus Kalziumsuperphosphat und inaktivierter Rizinussamen-Masse, der zwar einen hohen pflanzlichen Nährwert besitzt, jedoch in alpinen, von Erosion betroffenen oder durch Skifahren zerstörten Böden, nicht den angestrebten Erfolg, nämlich die Grasnarbenbildung und Durchwurzelung in diesen Böden zu fördern, erbrachte, weil essentielle Nährstoffe in ausreichender Konzentration, z.B. Magnesium als Pflanzennährstoff, fehlten und dieser Mangel sogar zur Übersäuerung alpiner Böden beitrug.

Die DE-C-127 339 offenbart ein aus erbsen- bis bohnengroß maschinell verschrottenem, eventuell entharztem Holz bestehendes Düngungsmittel, das unzersetzt entweder für sich oder gemeinsam mit anderen Düngerstoffen dem Ackerboden einverleibt wird. Mit diesem Düngungsmittel wird ein umfangreiches Netz von Lüftungskanälen im Boden gebildet und eine Verklumpung vermieden. Insbesondere wird dieses Düngungsmittel für lehmige Böden eingesetzt, welche durch Einbringen von Holzschrot zerteilt und gelockert werden. Dem Boden wird damit ein Stoff zugeführt, der Feuchtigkeit anzieht, speichert und so den Boden vor einer raschen Austrocknung schützt. Durch die andauernde, langsame Zersetzung des Holzschrotes wird eine anhaltende Erwärmung des Bodens, eine regere Tätigkeit von Mikroorganismen und eine rasche Zersetzung der anorganischen Nährstoffe des Bodens bewirkt. Versuche haben ergeben, daß dieses Düngemittel für hochgelegene, alpine Böden nicht geeignet ist, weil in diesem die erforderlichen Mineralstoffe sowie Magnesium und Spurenelemente fehlen.

Der Erfindung liegt daher die Aufgabe zugrunde, einen organisch-mineralischen Dünger, insbesondere zur Verwendung in hochgelegenen, alpinen Böden, vorzuschlagen, mit dem die Grasnarbenbildung und Durchwurzelung in diesen Böden, die besonders stark von Erosion, physikalischer Verwitterung infolge extremer Temperaturunterschiede betroffen oder durch Skifahren beschädigt worden sind, gefördert werden soll, wobei der Feinstaub in diesem Dünger durch Verpressung zu an sich bekannten Pellets gebunden sein soll, um so ein gezielteres Einbringen des Düngers in den Boden auch bei starkem Wind zu ermöglichen.

Diese Aufgabe wird durch den kennzeichnenden Teil von Anspruch 1 gelöst.

Weitere Ausgestaltungen der Erfindung ergeben sich aus den Unteransprüchen 2 bis 7.

So weist gemäß Unteranspruch 2 in Abwandlung der Erfindung der Gesamt-Stickstoff (N) bis zu 5,29 Gew.-% organisch-gebundenen Stickstoff (N) auf, um eine optimale Bodenfruchtbarkeit zu erzielen.

Zur Förderung des Pflanzenwachstums sieht Unteranspruch 3 vor, daß im Gesamt-Phosphat ($P_2O_5$) des Rizinusschrotes 1,88 Gew.-% mineralsäurelösliches Phosphat ($P_2O_5$) oder bis zu 2,2O Gew.-% wasserlösliches Phosphat ($P_2O_5$) enthalten sind.

Gemäß Unteranspruch 4 weist das Gesamtkaliumoxid ($K_2O$) des Rizinusschrotes als weiteren essentiellen Nährstoff für die Pflanzen 6,12 Gew.-% wasserlösliches Kaliumoxid ($K_2O$) auf.

Unteranspruch 5 sieht vor, daß der Magnesiumoxidanteil im Rizinusschrot bevorzugt 0,85 Gew.-% beträgt. Damit ist sichergestellt, daß dem Boden ausreichend Magnesium zur Bildung des Zentralatoms in den Chlorophyllmolekülen der Pflanzen zugeführt wird und daß damit auch einer Versauerung von Böden an bestimmten alpinen Orten entgegengewirkt wird.

In Abwandlung der Erfindung betragen nach Unteranspruch 6 die Anteile der biologisch wertvollen Spurenelemente pro Kilogramm Rizinusschrot 21 mg Kupfer (Cu), 79 mg Zink (Zn), 1,5 mg Blei (Pb), unter 0,1 mg Cadmium (Cd), 2,0 mg Chrom (Cr) und 1,3 mg Nickel (Ni) . Diese lebensnotwendigen Spurennährstoffe verhindern typische Mangelsymptome an Pflanzen, die durch zunehmende Intensität der Bodenbebauung auftreten und sorgen für gleichbleibendes Pflanzenwachstum.

Die Erfindung kann nach Unteranspruch 7 auch dahingehend abgewandelt werden, daß das doppeltgereinigte Kaliumsulfat ($K_2SO_4$) als Komponente des organischmineralischen Düngers aus

| 99,6 Gew.-% | Kaliumsulfat ($K_2SO_4$), |
|---|---|
| O,2 Gew.-% | Magnesiumsulfat ($MgSO_4$) und Calciumsulfat ($CaSO_4$) sowie |
| 0,1 Gew.-% | Natriumchlorid (NaCl) und |
| 0,1 Gew.-% | Wasser |

besteht. Diese Zusammensetzung trägt dazu bei, daß die Fähigkeit zur Grasnarbenbildung und Durchwurzelung eines Bodens in höheren, kargen Gebirgslagen gefördert wird, der insbesondere durch Erosion und physikalische Verwitterung geschädigt ist. Das Magnesiumsulfat ($MgSO_4$) und das Calciumsulfat ($CaSO_4$) tragen im übrigen zur Erhaltung der Bodenstruktur bei und wirken wie das Magnesiumoxid (MgO) im Rizinusschrot einer Versauerung dieser Böden entgegen.

Aus dem erfindungsgemäßen, organisch-mineralischen Dünger lassen sich in einfacher Weise zylindrische Pellets pressen,wie sie aus der DE-A- 2 739 618 bereits bekannt sind. Als besonders vorteilhaft haben sich Pellets mit Längen von etwa 3 mm bis 8 mm und Durchmesser von etwa 2,5 mm bis 2,8 mm erwiesen. Diese Pellets ermöglichen eine gezieltere Düngung, weil damit eine bestimmte Düngemenge pro Hektar eingehalten werden kann. Die Pellets eignen sich in hervorragender Weise zum Ausbringen mittels eines Düngerstreuers von Hand oder können auf das zu düngende Feld mittels Hubschrauber abgeworfen werden. Die Einbringung der Pellets ist auch bei starkem Wind möglich.

Die mit der Erfindung erzielten Vorteile bestehen im wesentlichen darin, daß der organisch-mineralische Dünger insbesondere in Böden von höheren, kargen Gebirgslagen, die von Erosion und physikalischer Verwitterung infolge extremer Temperaturunterschiede stark betroffen oder deren Vegetation durch Skifahrer zerstört worden sind, vorteilhaft verwendbar ist, weil er hier die Grasnarbenbildung und die Durchwurzelung des Bodens intensiv fördert.

3

Ausführungsbeispiele über den erfindungsgemäßen organisch-mineralischen Dünger werden im folgenden näher beschrieben. Hierzu zeigen

Fig. 1 schematisch eine nicht stabil verdichtete, aus Einzelkörnern bestehende Bodenstruktur als Anfangsstufe zur Lebendverbauung eines Bodens;

Fig. 2 schematisch einen Bodenaufbau, bei dem Krümelelemente des Bodens durch einen chemisch-physikalischen Ausflockungsvorgang gebildet sind und

Fig. 3 schematisch einen Bodenaufbau in der Endstufe, bei der Bodenkrümel durch Rizinusschrot biologisch lebend verbaut und gegen Druck und Nässe wegen starker Durchwurzelung stabil gehalten sind und

Fig. 4 einen aus dem organisch-mineralischen Dünger gewonnenen Pellet.

Der erfindungsgemäße organisch-mineralische Dünger besteht aus einer Mischung von 92 Gew.-% Rizinusschrot, welcher aus der Rizinussaat gewonnen ist und aus 8 Gew.-% doppelt-gereinigtem Kaliumsulfat ($K_2SO_4$).Das Rizinusschrot in der erfindungsgemäßen Kombination enthält 75,0 bis 82,0 Gew.-% organische Substanz, 5,0 bis 6,0 Gew.-% Gesamt-Stickstoff (N), ferner 2,0 bis 2,5 Gew.-% Gesamt-Phosphat ($P_2O_5$), 1,0 bis l,5 Gew.-% Gesamt-Kaliumoxid ($K_2O$), 0,7 bis0, 85 Gew.-% Magnesiumoxid (MgO),l0,0 bis 12,0 Gew.-% Wasser und etwa 1O5 mg/kg biologisch wertvolle Spurenelemente, wobei die Anteile der Spurenelemente pro Kilogramm Rizinusschrot bevorzugt 21 mg Kupfer (Cu), 79 mg Zink (Zn), 1,5 mg Blei (Pb), unter O,1 mg Cadmium (Cd), 2,O mg Chrom (Cr) und 1,3 mg Nickel (Ni) betragen.

Diese Spurenelemente, auch Mikro- oder besser Spurennährstoffe genannt, haben sich insbesondere im Hinblick auf die zunehmende Intensität des Pflanzenbaues und den Zwang zu möglichst hohen Erträgen als lebensnotwendig erwiesen. Fehlt eines dieser Spurenelemente im Nährstoffangebot, so kann es, wie aus Versuchen bekannt ist, zu typischen Mangelsymptomen an Pflanzen kommen. Ein unzureichendes Angebot an Spurennährstoffen dieser Art kann überdies zu verringerten Erträgen führen.

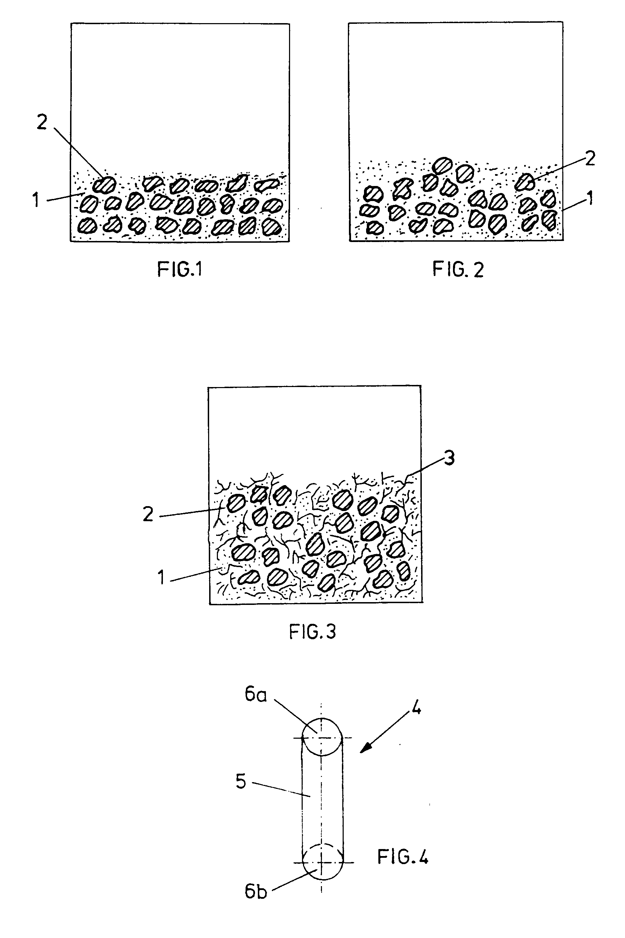

Der hohe Anteil des Rizinusschrotes an organischer Substanz von 75,0 bis 82,O Gew.-% macht den erfindungsgenäßen organisch-mineralischen Dünger auch zu einem ausgezeichneten Bodenverbesserungsmittel, dessen Wirkung nicht unmittelbar, sondern über das Bodenleben erfolgt. Wenn das Rizinusschrot in der erfindungsgemäßen Kombination in den Boden eingebracht ist, wird es von Bodenbakterien und -pilzen aufgenommen, die sich schnell entwickeln und zahlreich vermehren. Die Bodenbakterien und -pilze umspinnen, durchwuchern und verkleben die einzelnen kleinen Bodenteilchen und festigen sie gegen Zerfall und Dichitlagerung, wie es insbesondere die Fig. 3 zeigt, und was besonders in hochgelegenen, alpinen Böden, die durch Erosion und physikalische Verwitterung infolge extremer Temperaturunterschiede oder durch Skifahren geschädigt sind, von großer Bedeutung für die Grasnarbenneubildung und Durchwurzelung dieser Böden ist.

Damit es aber zu dem in Fig. 3 schematisch dargestellten Bodenaufbau in der Endstufe kommt, bei der Bodenkrümel 2 durch Rizinusschrot biologisch lebend verbaut und gegen Druck und Nässe wegen der starken Durchwurzelung 3 stabil gehalten sind, muß zunächst eine nicht stabil verdichtete, aus Einzelkörnern bestehende Bodenstruktur als Anfangsstufe zur Lebendverbauung eines Bodens vorhanden sein, die aus fast lagig aneinander gereihten Einzelkörnern oder Krümelelementen 2 besteht.

Wie aus der Fig. 2 hervorgeht, entsteht in einem weiteren Stadium ein Bodenaufbau, bei dem die Krümelelemente 2 im Boden 1 durch einen chemisch-physikalischen Ausflockungsvorgang gebildet sind und dabei statistisch auch gut verteilt sind, so daß nunmehr die biologische Lebendverbauung des Bodens durch das Rizinusschrot des organisch-mineralischen Düngers nach der Erfindung beginnen und eine kräftige Durchwurzelung 3 (Fig. 3) stattfinden kann, die, wie bereits ausgeführt, besonders in höheren, kargen Gebirgslagen zur Grasnarbenbildung und Wiederbegrünung von Gelände erforderlich ist.

Die Lebendverbauung des Bodens, die biologisch durch die Komponente des Rizinusschrotes im erfindungsgemäßen organisch-mineralischen Dünger erfolgt, wird dadurch beschleunigt, daß sich Rizinusschrot rasch umsetzt, aber nur in dem Maße, wie Feuchtigkeit, Wärme und Bodenleben mithelfen. Es entsteht also keine sogenannte einseitige Stoßwirkung. Mit dem hohen organischen Substanzanteil des Rizinusschrotes in der erfindungsgemäßen Kombination werden auch die Nährstoffe aus dem organisch-mineralischen Dünger über den Boden der Pflanzen gleichmäßig zugeführt, so daß Überdüngungsschäden vermieden und eine Bodenversalzung vorgebeugt werden kann. Da Nährstoffe, wie z.B. Stickstoff, Phosphat und Kali, insbesondere in leichten, sandigen Alpinböden, leicht ausgewaschen werden, trägt die organische Substanz des Rizinusschrotes wesentlich dazu bei, daß die essentiellen Nährstoffe in diesen Böden an Ort und Stelle festgehalten werden und hier noch eine ausreichende Humusbildung stattfinden kann, so daß Grasnarben nach Durchwurzelung in geschädigten, höheren, alpinen Böden erneut gebildet werden können, wie bereits ausgeführt wurde.

Hochgebirgs-Böden, die im Zuge des Wintersports durch Maschineneinsatz und ständiges Skifahren belastet sind, werden strukturlos. Derartig belastete Böden können durch den erfindungsgemäßen organisch-mineralischen Dünger wegen seines hohen organischen Substanzanteils ebenfalls erneut zur echten Lebendverbauung angeregt werden, da sich in dem durch den erfindungsgemäßen Dünger verbesserten Boden Regenwürmer und Bodenmikroorganismen sehr schnell vermehren, die einen solchen Boden leicht durchmischen, durchlüften und somit wieder in die gewünschte lebendverbaute Krümelstruktur umwandeln.

Der Gesamtstickstoff (N) variiert zwischen 5 und 6 Gew.-%. Einer Ausführungsform der Erfindung zufolge weist der Gesamt-Stickstoff (N) 5,29 Gew.-% organisch-gebundenen Stickstoff (N) auf und entspricht damit dem Düngermittelgesetz. Mit diesem hohen Anteil an organisch-gebundenem Stickstoff (N) wird im Endeffekt auch eine optimale Bodenfruchtbarkeit erreicht.

Das Rizinusschrot weist zwischen 2,0 bis 2,5 Gew.-% Gesamt-Phosphat ($P_2O_5$) auf. Um das Pflanzenwachstum in erwünschtem Maße zu fördern, sind in Abwandlung der Erfindung im Gesamt-Phosphat ($P_2O_5$) des Rizinusschrotes 1,88 Gew.-% minerallösliches Phosphat ($P_2O_5$) oder bis zu 2,20 Gew.-% wasserlösliches Phosphat ($P_2O_5$) enthalten. Dies ist besonders wichtig, da Phosphat zu den wesentlichen Bestandteilen der Pflanzenzellen und lebenswichtigen Verbindungen, wie z.B. Phytin, Lecithin und Nucleotiden, gehört und in den meisten Naturböden der pflanzenverfügbare Phosphat-Gehalt für ein optimales Pflanzenwachstum nicht ausreicht.

Der Gesamtanteil an Kaliumoxid ($K_2O$) variiert im Rizinusschrot zwischen 1,0 und 1,5 Gew.-% und kann in Abwandlung der Erfindung als weiteren essentiellen Nährstoff für die Pflanzen bis zu 6,12 Gew.-% wasserlösliches Kaliumoxid ($K_2O$) aufweisen. Obwohl Kalium an sich kein Bestandteil irgendeines wesentlichen organischen Inhaltsstoffes der Pflanze darstellt, sondern sich allein durch seine Ionenwirkung über die Beeinflussung des Quellungszustandes der Pflanzenzellen und als Aktivator einiger Enzymsysteme unentbehrlich macht, trägt dieser Gewichtsanteil an wasserlöslichem Kaliumoxid ($K_2O$) wesentlich zur Bodenfruchtbarkeit und insbesondere in höhergelegenen, alpinen Böden zur Narbenbildung und damit zur Bodenbefestigung bei.

Der Anteil an Magnesiumoxid (MgO) variiert im Rizinusschrot zwischen 0,8 und 2,0 Gew.-%. Er liegt bevorzugt bei 0,85 Gew.-%. Damit ist sichergestellt, daß dem Boden ausreichend Magnesium zur Bildung des Zentralatoms in den Chlorophylmolekülen der Pflanzen zugeführt wird und daß damit auch einer Versauerung von Böden an bestimmten alpinen Standorten entgegengewirkt wird.

Der erfindungsgemäße organisch-mineralische Dünger enthält 8 Gew.-% doppelt-gereinigtes Kaliumsulfat ($K_2SO_4$), welches wiederum aus 99,6 Gew.-% Kaliumsulfat ($K_2SO_4$), 0,2 Gew.-% Magnesiumsulfat ($MgSO_4$) und Calciumsulfat ($CaSO_4$), sowie jeweils aus 0,1 Gew.-% Natriumchlorid und Wasser besteht. Diese Zusammensetzung trägt dazu bei, daß der organisch-mineralische Dünger die Fähigkeit besitzt, die Grasnarbenbildung und Durchwurzelung von Böden in höheren, kargen Gebirgslagen zu fördern, der beispielsweise durch Skifahren stark geschädigt worden ist. Der Anteil an Magnesiumsulfat und Calciumsulfat trägt auch zur Erhaltung der Bodenstruktur bei und wirkt einer Versauerung dieser Böden entgegen.

Aus der Beschreibung wird deutlich, wie der erfindungsgemäße organisch-mineralische Dünger, insbesondere in höhergelegenen, kargen alpinen Böden, welche stark durch Erosion und physikalische Verwitterung infolge extremer Temperaturunterschiede wie auch durch intensives Skifahren geschädigt sind, seine Aktivität in Bezug auf Grasnarbenbildung und Durchwurzelung durch Wiedergewinnen von günstigem Porenvolumen optimal entfaltet und somit geschädigte, strukturlos gewordene Böden wieder zu neuem Leben erwecken kann, indem die Lebendverbauung des Bodens durch die biologische Komponente des Rizinusschrotes intensiv gefördert wird. Die Lebendverbauung des Bodens hat sich besonders stabil gegen Druck und Nässe erwiesen, die besonders in alpinen Böden zu großen Schäden führen kann.

Ein Ausführungsbeispiel des erfindungsgemäßen organisch-mineralischen Düngers hat folgende Zusammensetzung:

Beispiel

| 92 Gew.-% | Rizinusschrot der Rizinussaat und |
|---|---|
| 8 Gew.-% | doppelt-gereinigtes Kaliumsulfat ($K_2SO_4$), |

wobei das Rizinusschrot

| 78,00 Gew.-% | organische Substanz, |
|---|---|
| 6,00 Gew.-% | Gesamt-Stickstoff (N), |
| 2,50 Gew.-% | mineralsäurelösliches Phosphat ($P_2O_5$), |
| 1,50 Gew.-% | Gesamt-Kaliumoxid ($K_2O$), |
| 0,75 Gew.-% | Magnesiumoxid (MgO), |
| 11,15 Gew.-% | Wasser und Spurenelemente |

enthält und die Anteile der Spurenelemente pro Kilogramm

21 mg Kupfer (Cu),

79 mg Zink (Zn),

1,5 mg Blei (Pb), unter 0,1 mg Cadmium (Cd), 2,0 mg Chrom (Cr),

1,3 mg Nickel (Ni)

betragen. Im doppelt-gereinigten Kaliumsulfat sind anteilmäßig

| 99,6 Gew.-% | Kaliumsulfat ($K_2SO_4$), |
|---|---|
| 0,2 Gew.-% | Magnesiumsulfat ($MgSO_4$) und Calciumsulfat ($CaSO_4$), |
| 0,1 Gew.-% | Natriumchlorid (NaCl) und |
| 0,1 Gew.-% | Wasser |

enthalten.

**Patentansprüche**

**1.** Organisch-mineralischer Dünger, insbesondere zur Verwendung in hochgelegenen, alpinen Böden, gekennzeichnet durch eine Kombination, die aus einer Mischung von

| 92 Gew.-% | Rizinusschrot der Rizinussaat und |
|---|---|
| 8 Gew.-% | doppelt-gereinigtem Kaliumsulfat ($K_2SO_4$), |

besteht, wobie das Rizinusschrot

```
75,0 bis 82,0 Gew.-%  organische Substanz,
 5,0 bis  6,0    "     Gesamt-Stickstoff (N),
 2,0 bis  2,5    "     Gesamt-Phosphat (P₂O₅),
 1,0 bis  1,5    "     Gesamt-Kaliumoxid (K₂O),
 0,7 bis  0,85   "     Magnesiumoxid (MgO),
10,0 bis 12,0    "     Wasser und etwa
 105 mg/kg             Spurenelemente
```

enthält.

**2.** Organisch-mineralischer Dünger nach Anspruch 1, dadurch gekennzeichnet, daß der Gesamt-Stickstoff (H) bis zu 5,29 Gew.-% organisch-gebundenen Stickstoff (N) aufweist.

**3.** Organisch-mineralischer Dünger nach Anspruch 1, dadurch gekennzeichnet, daß im Gesamt-Phosphat ($P_2O_5$) des Rizinusschrotes 1,88 Gew.-% mineralsäurelösliches Phosphat ($P_2O_5$) oder bis zu 2,20 Gew.-% wasserlösliches Phosphat ($P_2O_5$) enthalten sind.

4. Organisch-mineralischer Dünger nach Anspruch 1, dadurch gekennzeichnet, daß das Gesamt-Kalium-oxid ($K_2O$) des Rizinusschrotes 6,12 Gew.-% wasserlösliches Kaliumoxid ($K_2O$) aufweist.

5. Organisch-mineralischer Dünger nach Anspruch 1, dadurch gekennzeichnet, daß der Anteil an Magnesiumoxid (MgO) im Rizinusschrot bevorzugt 0,85 Gew.-% beträgt.

6. Organisch-mineralischer Dünger nach Anspruch 1, dadurch gekennzeichnet, daß die Anteile der Spurenelemente pro Kilogramm Rizinusschrot 21 mg Kupfer (Cu), 79 mg Zink (Zn), 1,5 mg Blei (Pb), unter 0,1 mg Cadmium (Cd), 2,0 mg Chrom (Cr) und 1,3 mg Nickel (Ni) betragen.

7. Organisch-mineralischer Dünger nach Anspruch 1, dadurch gekennzeichnet, daß das doppelt-gereinigte Kaliumsulfat ($K_2SO_4$) aus

| | |
|---|---|
| 99,6 Gew.-% | Kaliumsulfat ($K_2SO_4$), |
| 0,2 Gew.-% | Magnesiumsulfat ($MgSO_4$) und Calciumsulfat ($CaSO_4$), |
| 0,1 Gew.-% | Natriumchlorid (NaCl) und |
| 0,1 Gew.-% | Wasser ($H_2O$) |

besteht.

**Claims**

1. Organic-mineral fertilizer for particular use in elevated alpine grounds, characterized by a combination consisting of a mixture of
92 weight % coarse meal of castor beans and
8 weight % double-cleaned potassium sulphate ($K_2SO_4$),
whereby the castor coarse meal contains

| | |
|---|---|
| 75.0 to 82.0 | weight % organic substance, |
| 5.0 to 6.0 | weight % total nitrogen (N), |
| 2.0 to 2.5 | weight % total phosphate ($P_2O_5$), |
| 1.0 to 1.5 | weight % total potassium oxide ($K_2O$), |
| 0.7 to 0.83 | weight % magnesium oxide (MgO), |
| 10.0 to 12.0 | weight % water and around |
| 105 mg/kg | trace elements. |

2. Organic-mineral fertilizer according to Claim 1 characterized by the fact that the total nitrogen (N) contains up to 5.29 weight % of organically bound nitrogen (N).

3. Organic-mineral fertilizer according to Claim 1 characterized by the fact that the total phosphate ($P_2O_5$) of the castor coarse meal contains 1.88 weight % of mineral-acid-soluble phosphate ($P_2O_5$) or up to 2.20 weight % of water-soluble phosphate ($P_2O_5$).

4. Organic-mineral fertilizer according to Claim 1 characterized by the fact that the total potassium oxide ($K_2O$) of the castor coarse meal contains 6.12 weight % of water-soluble potassium oxide ($K_2O$).

5. Organic-mineral fertilizer according to Claim 1 characterized by the fact that the share of magnesium oxide (MgO) in the castor coarse meal is preferentially 0.85 weight %.

6. Organic-mineral fertilizer according to Claim 1 characterized by the fact that the shares of trace elements per kilogram of castor coarse meal are 21 mg copper (Cu), 79 mg zinc (Zn), 1.5 mg lead (Pb), less than 0.1 mg cadmium (Cd), 2.0 mg chrome (Cr) and 1.3 mg nickel (Ni).

7. Organic-mineral fertilizer according to Claim 1 characterized by the fact that the double-cleaned potassium sulphate ($K_2SO_4$) consists of

EP 0 330 941 B1

| 99.6 weight % | potassium sulphate (K₂SO₄), |
| 0.2 weight % | magnesium sulphate (MgSO₄) and calcium sulphate (CaSO₄) |
| 0.1 weight % | sodium chloride (NaCl) and |
| 0.1 weight % | water (H₂O). |

**Revendications**

1. Engrais organique-minéral, destiné en particulier à l'utilisation dans les sols alpins en altitude, caractérisé par-le fait qu'il existe un mélange de

| 92% en poids | de gruau de ricin de graines de ricin et |
| 8% en poids | sulfate de potassium (K₂SO₄) doublement nettoyé, |

le gruau de ricin contenant de

| 75,0 à 82,0% en poids | de substances organiques, |
| 5,0 à 6,0% en poids | d'azote total (N), |
| 2,0 à 2,5% en poids | de phosphate total (P²O₅), |
| 1.0 à 1,5% en poids | d'oxyde de potassium total (K²O), |
| 0,7 à 0,85% en poids | d'oxyde de magnésium total (MgO) |
| 10,0 à 12,0% en poids | d'eau et environ |
| 105 mg/kg | d'oligo-éléments. |

2. Engrais organique-minéral d'après la revendication 1, caractérisé par le fait que l'azote total (N) présente jusqu'à 5,29% en poids d'azote organiquement combiné (N).

3. Engrais organique-minéral d'après la rencendication 1, caractérisé par le fait que dans le phosphate total (P₂O₅) du gruau de ricin, sont contenus 1,88% en poids de phosphate soluble en acide minéral (P₂O₅) ou jusqu'à 2,20% en poids de phosphate soluble dans l'eau (P₂O₅).

4. Engrais organique-minéral d'après la revendication 1, caractérisé par le fait que l'oxyde de potassium total (K₂O) du gruau de ricin présente 6,12% en poids d'oxyde de potassium soluble dans l'eau (K₂O).

5. Engrais organique-minéral d'après la revendication 1, caractérisé par le fait que le pourcentage d'oxyde de magnésium total (MgO) dans le gruau représente prioritairement 0,85% en poids.

6. Engrais organique-minéral d'après la revendication 1, caractérisé par le fait que les pourcentrages d'oligo-éléments par kilogramme de gruau de ricin représentent 21 mg de cuivre (Cu), 79 mg de Zinc (Zn), 1,5 mg de plomb (Pb), moins de 0,1 mg de cadmium (Cd), 2,0 mg de chrome (Cr) et 1,3 mg de nickel (Ni).

7. Engrais organique-minéral d'après la revendication 1, caractérisé par le fait que le sulfate de potassium doublement nettoyé (K₂SO₄) se compose de

| 99,6% en poids | de sulfate de potassium (K₂SO₄), |
| 0,2% en poids | de sulfate de magnésium (MgSO₄) et de sulfate de calcium (CaSO₄), |
| 0,1% en poids | de chlorure de sodium (NaCl) et |
| 0,1% en poids | d'eau (H₂O). |

8

FIG.1

FIG. 2

FIG.3

FIG.4